**Europäisches Patentamt**

**European Patent Office**

**Office européen des brevets**

(19)

(11) Veröffentlichungsnummer: **0 096 427**

**A2**

(12) # EUROPÄISCHE PATENTANMELDUNG

(21) Anmeldenummer: **83200646.4**

(22) Anmeldetag: **06.05.83**

(51) Int. Cl.³: **B 65 G 27/04**
**B 01 J 8/16, F 26 B 17/26**

(30) Priorität: **05.06.82 DE 3221308**

(43) Veröffentlichungstag der Anmeldung:
**21.12.83 Patentblatt 83/51**

(84) Benannte Vertragsstaaten:
**AT BE CH DE FR GB IT LI LU NL SE**

(71) Anmelder: **METALLGESELLSCHAFT AG**
**Reuterweg 14 Postfach 3724**
**D-6000 Frankfurt/M.1(DE)**

(72) Erfinder: **Ottow, Manfred, Dr.-Ing.**
**Walporzheimer Strasse 24**
**D-1000 Berlin 28(DE)**

(74) Vertreter: **Fischer, Ernst, Dr.**
**Reuterweg 14**
**D-6000 Frankfurt am Main 1(DE)**

(54) **Verfahren zur Förderung von körnigen Feststoffen zwischen zwei Platten.**

(57) Zwei gegenüberliegende und untereinander verbundene Platten (1, 2) werden in lineare schwingende Bewegung versetzt und dadurch den Feststoffteilchen Förderimpulse erteilt. Zur Durchführung von chemischen oder physikalischen Prozessen im Gleich- oder Gegenstrom mit strömenden Medien unter hohen Stoff- oder Wärmeaustausch während der Schwingförderung oder zur Zerkleinerung oder Verdichtung der Feststoffteilchen werden den Feststoffteilchen Förder-impulse von beiden Platten (1, 2) erteilt und der Feststoff füllt im Ruhezustand nur einen Teil des lichten Querschnitts zwischen den beiden Platten aus.

Fig.5

EP 0 096 427 A2

METALLGESELLSCHAFT
Aktiengesellschaft
6000 Frankfurt/Main 1

31. März 1982
SCHR/0739/LWÜ

Prov. Nr. 8720 LC

<u>Verfahren zur Förderung von körnigen Feststoffen zwischen
zwei Platten</u>

Die Erfindung betrifft ein Verfahren zur Förderung von
körnigen Feststoffen zwischen zwei gegenüber angeordneten
und miteinander verbundenen Platten, wobei die beiden
Platten in lineare schwingende Bewegung versetzt werden
und dabei den Feststoffteilchen Förderimpulse erteilt
werden.

Es ist bekannt, körnige Feststoffe mit Schwingförderern zu
transportieren. Die meisten Schwingförderer sind als
Schwingförder-Rinnen ausgebildet. Die Rinne ist federnd
abgestützt oder aufgehängt und wird durch eine am Boden
unter einem spitzen Winkel angreifende Kraft in schwingende Bewegung versetzt. Die Kraft wird durch rotierende
Unwuchtmassen, Exzenter oder elektromagnetische Antriebe
erzeugt. Diese Kraft bewirkt eine horizontale und eine
vertikale Beschleunigung der Rinne. Daraus resultiert ein
Beschleunigungs-Vektor im spitzen Winkel zur Förderrichtung. Die vertikale Beschleunigung muß die Erdbeschleunigung überschreiten, damit die Feststoffteilchen sich von
der Rinne ablösen und dadurch eine Wurfbewegung in Förderrichtung durchführen. Die Rinnen können an derOberseite offen sein oder sie können zur Verhinderung von Staubaustritt oder zur Durchführung chemischer Reaktionen mit Gasen abgedeckt werden. Der Deckel hat keinen Einfluß auf die Förderbewegung der Feststoffteilchen (DE-OS 25 05 202, DE-AS 22 07 225, DE-OS 24 10 328, DE-OS 24 10 344, DE-OS 24 10 345, US-PS 2 277 067, "Fördern und Heben" 1961, S. 317 bis 327).

Der Beschleunigungs-Vektor im spitzen Winkel zur Förderrichtung kann auch durch getrennt erfolgende Beschleunigung der Rinne in vertikaler und in paralleler Richtung zur Förderrichtung erzeugt werden. Dabei kann die Förderrichtung durch Umpolen der parallel wirkenden Schwingungserreger umgekehrt werden (DE-OS 19 42 332).

Mit diesen Schwingförder-Rinnen ist auch bis zu einem bestimmten Winkel eine Förderung nach aufwärts oder abwärts möglich. Es ist jedoch keine Förderung senkrecht aufwärts oder abwärts möglich. Eine Förderung in senkrechter Richtung aufwärts ist nur mit wendelförmig ausgebildeten Rinnen oder in mit Einbauten versehenen Rohren möglich (US-PS 4 140 215).

Aus der GB-PS 1 225 899 ist ein Förderer bekannt, der aus zwei konzentrisch zueinander angeordneten Rohren besteht, wobei der Ringraum zwischen den beiden Rohren durch radial angeordnete Wände in eine Vielzahl von Kammern unterteilt ist. Der Förderer taucht mit seinem unteren, offenen Ende in ein Materialbett. Er wird in lineare Schwingungen parallel zur Achse der Rohre und gleichzeitig in hin- und hergehende Torsionsschwingungen um die Achse versetzt. Die Kanäle sind in der Ruhestellung über den ganzen Querschnitt mit Material gefüllt. Durch die Winkelbeschleunigung der Torsionsschwingungen wird das Material an die Wände der Kammern gepreßt und durch die linearen Schwingungen nach oben gefördert.

Die Schwingförder-Rinnen sind in erster Linie als Transportgerät geeignet. Für die Durchführung von chemischen oder physikalischen Prozessen, bei denen in abgedeckten Rinnen Gase im Gleich- oder Gegenstrom zur Transportrichtung geleitet werden, sind diese Rinnen schlecht geeignet, weil der Stoff- und Wärmeaustausch hauptsächlich nur an der Oberfläche des Feststoffbettes erfolgt und nicht dessen gesamten Querschnitt erfaßt. Eine Durchgasung des gesamten Bettes mittels Gasen, die durch Lochböden im Querstrom durch das Bett geführt werden, erfordert einen relativ großen apparativen Aufwand. Außerdem ist der in vielen Fällen erwünschte Gegenstrom oder Gleichstrom nicht möglich.

Der Erfindung liegt die Aufgabe zugrunde, diese Nachteile zu vermeiden und insbesondere eine Schwingförderung zu ermöglichen, bei der chemische oder physikalische Prozesse im Gegen- oder Gleichstrom mit strömenden Medien unter hohem Stoff- und Wärmeaustausch erfolgen, oder bei der eine Zerkleinerung oder Verdichtung der Feststoffteilchen erfolgt.

Die Lösung dieser Aufgabe erfolgt erfindungsgemäß dadurch, daß den Feststoffteilchen die Förderimpulse von beiden Platten erteilt werden und der Feststoff nur einen Teil des lichten Querschnittes zwischen den beiden Platten im Ruhezustand ausfüllt.

Die Feststoffteilchen werden in senkrechter Richtung zu den Platten so stark beschleunigt, daß sie auf die gegenüberliegende Platte auftreffen, so daß sie abwechselnd von beiden Platten beschleunigt werden. Die erforderliche Beschleunigung ist abhängig vom Abstand der Platten. Die beiden Platten sind allgemein planparallel zueinander angeordnet. Sie können in jedem Winkel, auch vertikal zur Horizontalen, angeordnet sein. Die beiden Platten sind im allgemeinen durch Seitenwände miteinander gasdicht verbunden, so daß bei Prozessen ohne Gasbeaufschlagung auch kein Staub austritt. Während der Förderung können chemische Prozesse, physikalische Prozesse oder beide zusammen durchgeführt werden. Durch den Aufprall der Teilchen an beiden Platten ist z.B. eine Verdichtung oder Agglomeration der Teilchen möglich.

Eine vorzugsweise Ausgestaltung besteht darin, daß den Platten Schwingungen mit definierten Frequenzen und Amplituden senkrecht und parallel zur Förderrichtung der Feststoffteilchen erteilt werden. Die getrennte Erzeugung der Schwingungen ergibt eine geringere mechanische Beanspruchung und gute Regelmöglichkeiten für optimale Förderund Prozeßbedingungen.

Eine vorzugsweise Ausgestaltung besteht darin, daß das Verhältnis zwischen den Frequenzen der parallelen und senkrechten Schwingungen etwa 2 : 3 beträgt. Bei diesem Verhältnis liegen die Feststoffteilchen nach dem Auftreffen an den Platten kurzzeitig an und werden von den Platten ein Stück in Förderrichtung mitgenommen, ehe sie zurückgeschleudert werden. Dieser Schlepp-Effekt ist insbesondere bei einem Gegenstromverfahren wichtig, da er der Rückdrift der Teilchen entgegenwirkt.

Eine vorzugsweise Ausgestaltung besteht darin, daß der Feststoff weniger als 30 %, vorzugsweise weniger als 10 %, des lichten Querschnittes zwischen den beiden Platten im Ruhezustand ausfüllt. Dadurch werden besonders gute Ergebnisse im Hinblick auf chemische oder physikalische Prozesse erzielt.

Eine vorzugsweise Ausgestaltung besteht darin, daß ein fluides Medium im Gleich- oder Gegenstrom zur Förderrichtung des Feststoffes durch den Raum zwischen den Platten geleitet wird. Das fluide Medium kann aus Gasen, Dämpfen oder Flüssigkeiten bestehen. Dabei wird ein sehr guter Stoff- oder Wärmeaustausch erzielt. Auf diese Weise können chemische Prozesse - wie z. B. die Direktreduktion von Eisenerzen zu Schwammeisen, die Schwelung von Ölschiefer oder Ölsand, die Röstung von sulfidischen Erzen usw. - oder Erwärmung oder Abkühlung des Feststoffes durch entsprechende chemische Zusammensetzung und Temperatur der fluiden Medien durchgeführt werden. Eine indirekte Erwärmung oder Kühlung des Feststoffes ist zwar auch möglich, jedoch müßte dazu die schwingende Masse vergrößert werden.

Es können mehrere Beschickungsöffnungen, Austragsöffnungen, Gaseinleitungen und Gasableitungen angeordnet werden. Dadurch ist eine optimale Führung der Prozesse möglich.

Eine vorzugsweise Ausgestaltung besteht darin, daß zwischen den beiden Platten mindestens ein Zwischenblech mit Durchtrittsöffnungen für die beschleunigten Feststoffteilchen angeordnet wird. Die Durchtrittsöffnungen erstrecken sich in gewissen Abständen quer zur Förderrichtung und sind zweckmäßigerweise schlitzförmig ausgebildet. Dadurch werden auch bei einem großen Kornspektrum den kleinen Feststoffteilchen Förderimpulse von zwei gegenüberliegenden Platten erteilt, auch wenn die angelegte Amplitude senkrecht zur Förderrichtung nicht dazu ausreicht, diese Teilchen bis zu den äußeren Platten zu werfen.

Die Erfindung wird anhand von Figuren näher erläutert.

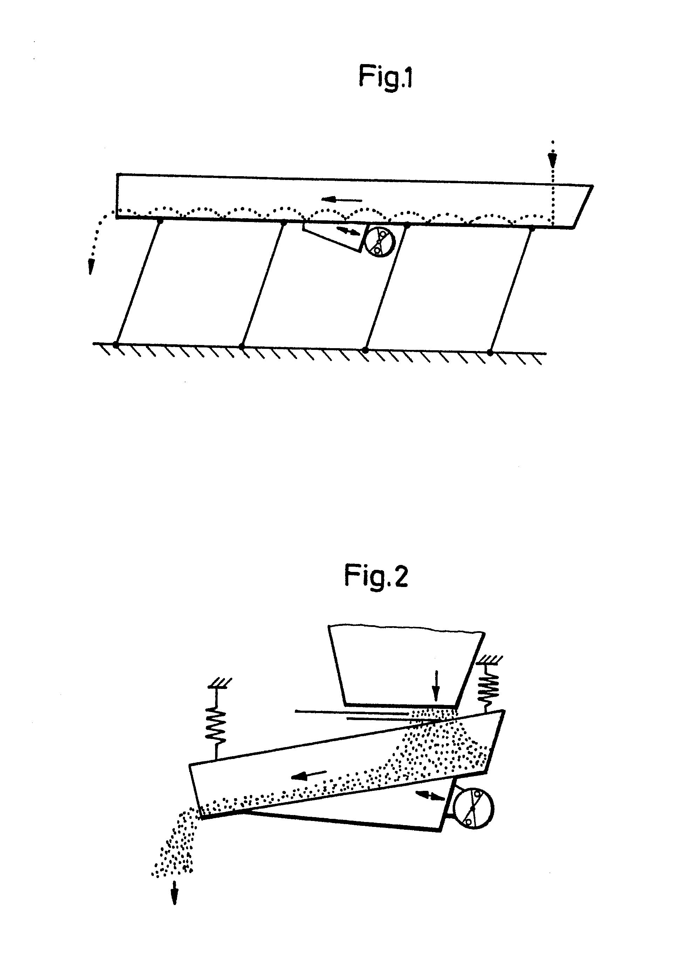

Fig. 1 zeigt eine bekannte Schwingförderrinne und die Förderbewegung der Feststoffteilchen in dieser Rinne.

Fig. 2 zeigt eine bekannte Schwingförderrinne, die als
Austragsorgan für einen Bunker ausgebildet ist.

Fig. 3 ist eine Seitenansicht einer Vorrichtung für das
erfindungsgemäße Verfahren.

Fig. 4 ist eine Ansicht der Figur 3 von links.

Fig. 5 ist ein Längsschnitt durch Figur 3 mit eingezeichneter Förderbewegung der Feststoffteilchen und des
Gases bei Gegenstrom.

Fig. 6 zeigt die Förderbewegung der Feststoffteilchen ohne
Gasströmung.

Fig. 7 zeigt die Förderbewegung der Feststoffteilchen bei
einer Gasströmung, die im Gegenstrom wirkt.

Fig. 8 zeigt die Förderbewegung der Feststoffteilchen bei
einer Ausgestaltung mit Zwischenblechen.

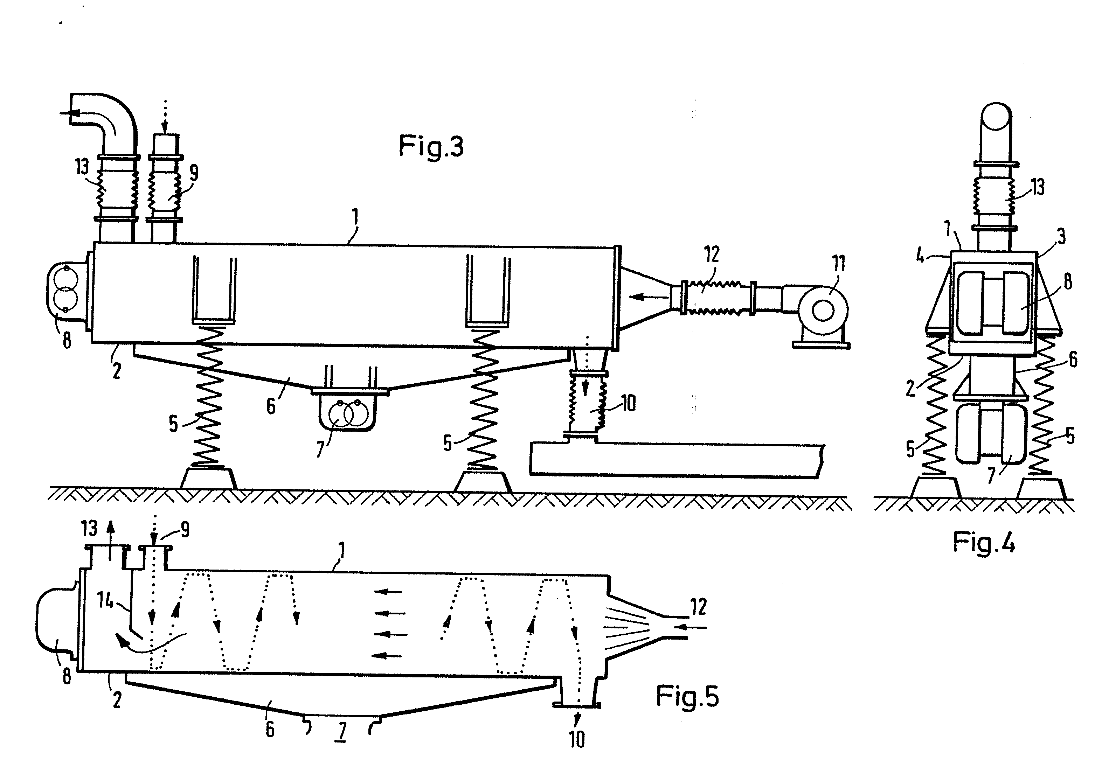

In den Figuren 3 bis 5 sind die beiden Platten 1 und 2
parallel zueinander angeordnet und durch die Seitenwände
3, 4 gasdicht miteinander verbunden. An den Seitenwänden
3, 4 sind federnde Abstützungen 5 befestigt. Unter der
Platte 2 ist eine Versteifung 6 angeordnet, an der ein
Schwingungserreger 7 befestigt ist, der die Schwingungen
mit definierter Frequenz und Amplitude senkrecht zur Förderrichtung erzeugt. An der Stirnseite ist ein Schwingungserreger 8 angeordnet, der die Schwingungen mit definierter Frequenz und Amplitude parallel zur Förderrichtung erzeugt. Der Eintrag des Feststoffes erfolgt durch
die flexible Eintragsvorrichtung 9 und der Austrag durch
die flexible Austragsvorrichtung 10. Ein Gas wird von dem
Gebläse 11 über die flexible Zuleitung 12 im Gegenstrom
eingeblasen und über die flexible Ableitung 13 abgeführt.

zwischen der Eintragsvorrichtung 9 für den Feststoff und der Ableitung 13 für das Gas ist ein Umlenkblech 14 angeordnet.

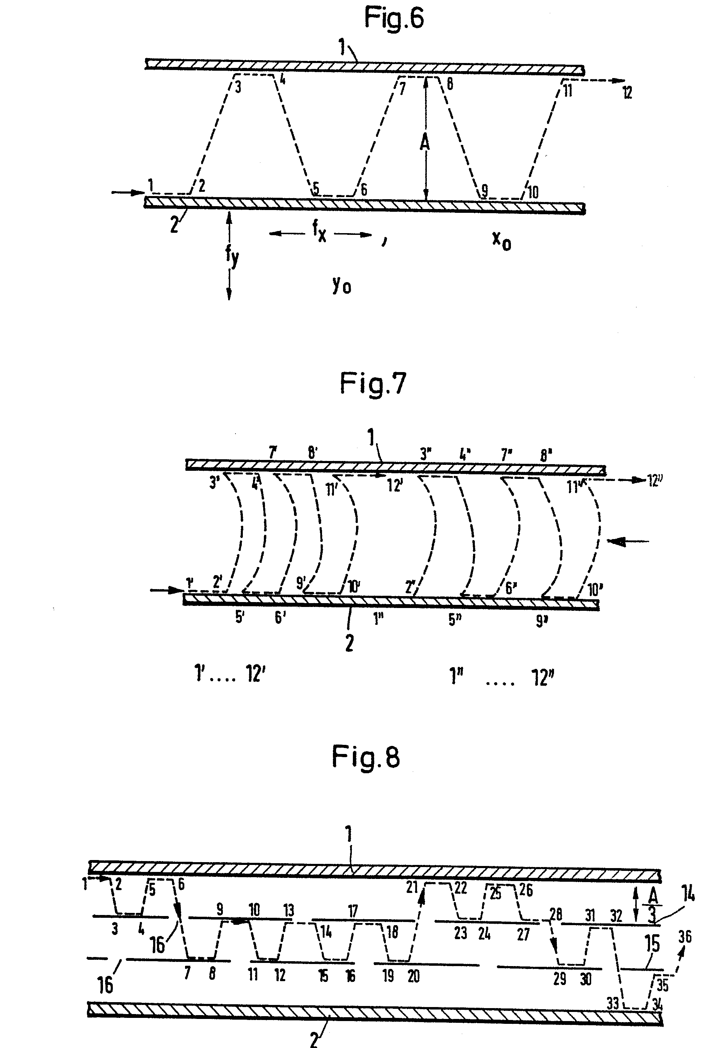

In Figur 6 ist mit $f_y$ die Frequenz und mit $y_o$ die Amplitude bezeichnet, welche die Schwingungen senkrecht zur Förderbewegung der Feststoffteilchen erzeugen und mit $f_x$ und $x_o$ diejenigen, welche die Schwingungen parallel zur Förderrichtung erzeugen. Die Amplituden $y_o$ und $x_o$ wirken jeweils in zwei Richtungen. Das Verhältnis der Frequenzen zwischen $f_x$ und $f_y$ beträgt 2:3. Der Abstand der Platte 1 und 2 ist mit A bezeichnet. Auf dem Wege 1-2 liegt das Feststoffteilchen an der Platte 2 und wird durch die horizontale Bewegung der Platte 2 dieses Stück nach rechts mitgeschleppt. Bei 2 wird das Teilchen von der Platte 2 zur Platte 1 geschleudert, trifft dort bei 3 auf, wird bis 4 mitgeschleppt und dann von der Platte 1 wieder zur Platte 2 geschleudert.

In Figur 7 werden die Bahnen der Feststoffteilchen durch den Gasstrom gekrümmt. In der linken Hälfte sind die Bahnen von feinem Korn gezeigt und in der rechten Hälfte die Bahnen von gröberem Korn.

In Figur 8 ist der Weg der Teilchen zwischen den Platten 1, 2 und zwei Zwischenblechen 14, 15 mit Schlitzen 16 dargestellt. Die Amplitude $x_o$ der Schwingungen senkrecht zur Förderrichtung muß nur so groß sein, daß die feinkörnigen Teilchen Impulse erhalten, die zum Auftreffen auf das benachbarte Zwischenblech 14 oder 15 ausreichen. Wenn z.B. der von der Platte 1 am Punkt 6 erteilte Impuls für die gröberen Teilchen ausreicht, sie bis zum Punkt 7 auf das Zwischenblech 15 zu schleudern, dieser Impuls aber nicht ausreicht, feinere Teilchen auch bis zum Punkt 7 zu schleudern, dann treffen diese feineren Teilchen entweder auf die Ober- oder Unterseite des Zwischenbleches 14 und werden dort wieder beschleunigt.

Die Erfindung hat hauptsächlich die Vorteile, daß eine
sehr gute Verteilung der Feststoffteilchen über den ganzen
Querschnitt erfolgt, daß hohe Relativgeschwindigkeiten
zwischen den Feststoffteilchen und dem Fluid erreicht werden und dadurch eine sehr gute Reaktion mit im Gegen- oder
Gleichstrom geführten fluiden Medien in wirtschaftlicher
Weise erfolgt, ein guter Wärmeaustausch möglich ist und
die Teilchen verdichtet oder agglomeriert werden können.

Patentansprüche

1) Verfahren zur Förderung von körnigen Feststoffen zwischen zwei gegenüber angeordneten und miteinander verbundenen Platten, wobei die beiden Platten in lineare schwingende Bewegung versetzt werden und dabei den Feststoffteilchen Förderimpulse erteilt werden, dadurch gekennzeichnet, daß den Feststoffteilchen die Förderimpulse von beiden Platten erteilt werden und der Feststoff nur einen Teil des lichten Querschnitts zwischen den beiden Platten im Ruhezustand ausfüllt.

2) Verfahren nach Anspruch 1, dadurch gekennzeichnet, daß den Platten Schwingungen mit definierten Frequenzen und Amplituden senkrecht und parallel zur Förderrichtung der Feststoffteilchen erteilt werden.

3) Verfahren nach Anspruch 2, dadurch gekennzeichnet, daß das Verhältnis zwischen den parallelen Frequenzen und den senkrechten Frequenzen etwa 2 : 3 beträgt.

4) Verfahren nach einem der Ansprüche 1 bis 3, dadurch gekennzeichnet, daß der Feststoff weniger als 30 %, vorzugsweise weniger als 10 %, des lichten Querschnittes zwischen den beiden Platten im Ruhezustand ausfüllt.

5) Verfahren nach einem der Ansprüche 1 bis 4, dadurch gekennzeichnet, daß ein fluides Medium im Gleich- oder Gegenstrom zur Förderrichtung des Feststoffes durch den Raum zwischen den Platten geleitet wird.

6) Verfahren nach einem der Ansprüche 1 bis 4, dadurch gekennzeichnet, daß zwischen den beiden Platten mindestens ein Zwischenblech mit Durchtrittsöffnungen für die beschleunigten Feststoffteilchen angeordnet werden.

# Fig.1

# Fig.2

0096427

Fig.3

Fig.4

Fig.5

0096427

## Fig.6

## Fig.7

1' .... 12'                    1" .... 12"

## Fig.8